(19) Europäisches Patentamt
European Patent Office
Office européen des brevets

(11) **EP 4 769 955 A1**

(12) **EUROPEAN PATENT APPLICATION**
published in accordance with Art. 153(4) EPC

(43) Date of publication:
01.07.2026 Bulletin 2026/27

(51) International Patent Classification (IPC):
*H04B 1/16* (2006.01)

(21) Application number: 24876128.0

(22) Date of filing: 02.07.2024

(52) Cooperative Patent Classification (CPC):
G06N 3/0464; H04B 1/16; H04B 7/0413;
H04L 25/02; H04L 27/12; H04L 27/22

(86) International application number:
PCT/CN2024/103021

(87) International publication number:
WO 2025/077306 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.10.2023 CN 202311318973

(71) Applicant: ZTE Corporation
Shenzhen, Guangdong 518057 (CN)

(72) Inventor: ZHANG, Yuxuan
Shenzhen, Guangdong 518057 (CN)

(74) Representative: Aipex B.V.
Vestdijk 51
5611 CA Eindhoven (NL)

(54) **SIGNAL RECEIVING METHOD, COMMUNICATION NODE AND STORAGE MEDIUM**

(57) Provided are a signal receiving method, a communication node, and a storage medium. The method includes inputting a received signal to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal; and demodulating the output signal to obtain received data.

Input a received signal to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal — 110

Demodulate the output signal to obtain received data — 120

**FIG. 1**

**Description**

TECHNICAL FIELD

The present application relates to the field of wireless communication technologies, for example, a signal receiving method, a communication node, and a storage medium.

BACKGROUND

With the continuously increasing demands of economic and social development, infrastructure construction has developed rapidly, and mobile communication demands in high-mobility scenarios such as high-speed railways and subways are steadily increasing. Accordingly, achieving high efficiency and reliability of wireless communications in high-speed scenarios has become a research hotspot in the communications industry both domestically and internationally.

Different from more common low-mobility scenarios, wireless channels in high-speed scenarios are characterized by signal distortion caused by high Doppler frequency shifts and rapid time variations, requiring more accurate channel estimation and posing greater challenges to the design of communication systems. In the related art, channel estimation and equalization technologies applicable to high-mobility scenarios are mostly implemented based on a conventional multiple-input multiple-output (MIMO) plus orthogonal frequency-division multiplexing (OFDM) wireless communication receiver architecture by acquiring channel state information and performing frequency-domain estimation and interpolation on pilot signals. Although the spatial multiplexing diversity gain of MIMO and the interference resistance of orthogonal subcarriers in OFDM provide favorable wireless signal transmission performance, the insertion of a large number of pilot signals and code-division multiplexing occupies data transmission resources, thereby affecting the overall system throughput to a certain extent and resulting in relatively low processing efficiency of received signals.

SUMMARY

Provided are a signal receiving method, a communication node, and a storage medium.

Embodiments of the present application provide a signal receiving method.

The method includes inputting a received signal to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal; and demodulating the output signal to obtain received data.

Embodiments of the present application also provide a communication node. The communication node includes a memory, a processor, and a computer program stored in the memory and executable by the processor. When executed by the processor, the program causes the processor to perform the signal receiving method.

Embodiments of the present application also provide a computer-readable storage medium storing a computer program which, when executed by a processor, causes the processor to perform the signal receiving method.

BRIEF DESCRIPTION OF DRAWINGS

FIG. 1 is a flowchart of a signal receiving method according to an embodiment.

FIG. 2 is a diagram of a two-stream signal data frame structure according to an embodiment.

FIG. 3 is a diagram of a signal transmission system based on cascaded neural networks according to an embodiment.

FIG. 4 is a block diagram of a high-speed receiver based on data-model dual-driven cascaded neural networks according to an embodiment.

FIG. 5 is a diagram illustrating the structure of a signal receiving apparatus according to an embodiment.

FIG. 6 is a diagram illustrating a hardware structure of a communication node according to an embodiment.

DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

The present application provides a signal receiving method for improving signal throughput and signal reception performance. In recent years, artificial intelligence (AI) technologies such as machine learning and deep learning have overcome the limitations of conventional communication modules in system modeling and model approximation and have made progress in multiple aspects including channel estimation, channel equalization, higher-layer user scheduling, and network deployment optimization. Based on large-scale data processing and training, AI technologies can be used to construct more flexible and reliable network models to achieve system performance optimization. With respect to AI-based physical layer design, there are mainly two mainstream approaches: end-to-end communication link design based on AI technologies, and communication module algorithm design based on AI technologies. The AI-based communication module algorithm design refers to replacing one or more modules in a conventional transmitter or receiver with deep neural network models. Such designs can be further classified into a data-driven approach and a data-model dual-driven approach. In the data-driven approach, deep learning networks are used to replace multiple modules of a wireless communication system, whereas in the data-model dual-driven approach, without changing the original wireless communication system model framework, a deep learning network is used to replace a specific module or to train related parameters, thereby achieving performance improvement. In high-speed scenarios, the present application replaces a conventional wireless channel receiver architecture with a deep learning neural network to improve performance gain and combines precoding and pre-equalization processing at a transmitter to achieve pilot-free transmission, thereby improving the system throughput.

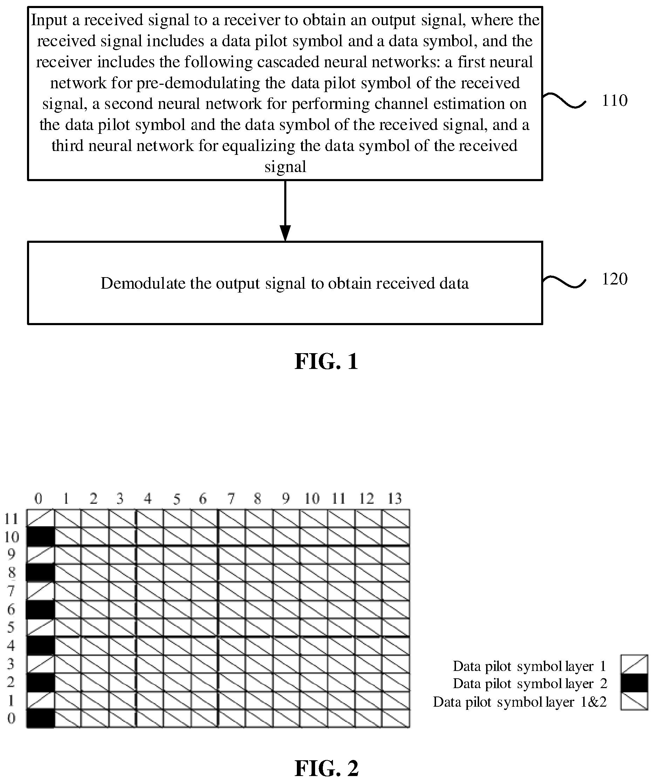

FIG. 1 is a flowchart of a signal receiving method according to an embodiment. As shown in FIG. 1, the method of this embodiment includes step 110 and step 120.

In step 110, a received signal is input to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal.

In step 120, the output signal is demodulated to obtain received data.

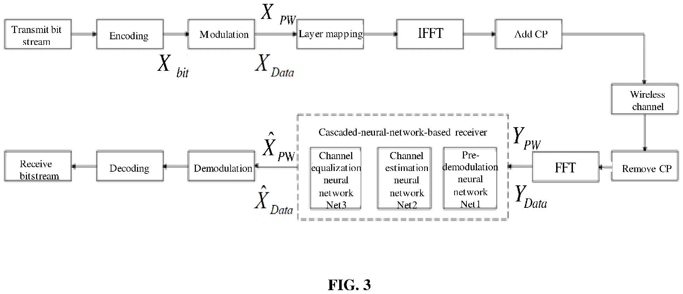

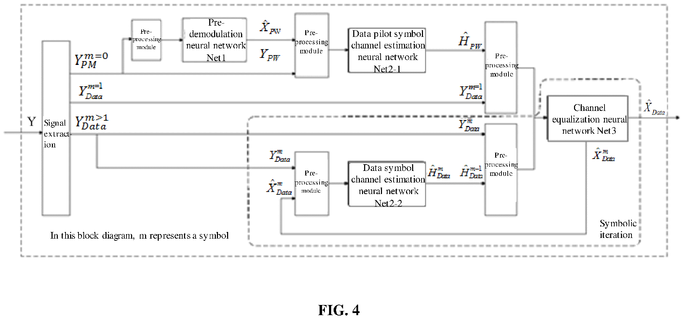

In this embodiment, it is assumed that in a pilot-free communication system, the received signal may be represented by Y. FIG. 2 is a diagram of a two-stream signal data frame structure according to an embodiment. As shown in FIG. 2, the data pilot symbol included in the received signal may be represented by $Y_{PW}$, and the data symbol included in the received signal may be represented by $Y_{Data}$. The received data is normalized by default for OFDM signals to be detected after passing through a multipath fading channel. The receiver performs detection at a granularity of a symbol. FIG. 3 is a diagram of a signal transmission system based on cascaded neural networks according to an embodiment. The transmitting-end signal of a transmitter is divided into data pilot symbols and data symbols. As shown in FIG. 3, the data pilot symbols and the data symbols can both carry transmitted data information and can be configured with different modulation schemes according to actual performance requirements. FIG. 4 is a block diagram of a high-speed receiver based on data-model dual-driven cascaded neural networks according to an embodiment. As shown in FIG. 4, the receiver may use three cascaded deep learning neural networks to implement a symbol-level processing flow. The first neural network can be used for pre-demodulating the data pilot symbol. The second neural network can be used for performing channel estimation on the data pilot symbol and the data symbol. The third neural network can be used for MIMO equalization of the data symbol. The receiver of this embodiment may be data-model dual-driven. The receiver can implement signal detection functions of a conventional communication receiver in high-speed scenarios. The design of AI modules for MIMO channel estimation and channel equalization supports both single-stream and multi-stream signal configurations and can achieve a certain degree of performance improvement compared with conventional receivers in high-speed scenarios. By introducing the concept of data pilot symbols into input data, the receiver of this embodiment avoids the problem in conventional communication systems in which pilot symbols occupy data symbol resources, thereby improving the system throughput. In addition, the data pilot symbols and the data symbols flexibly support respective configuration of the number of symbols and configuration of the modulation scheme to meet performance requirements in high-speed communication scenarios. In addition, the structure of the neural network of this embodiment includes, but is not limited to, a deep neural network, a convolutional neural network, a residual neural network, or a residual neural network with an attention mechanism.

In an embodiment, the second neural network includes a first sub-network for performing channel estimation on the data pilot symbol of the received signal and a second sub-network for performing channel estimation on the data symbol of the received signal.

Input of the second sub-network includes the data symbol of the received signal and output of the third neural network.

In this embodiment, the second neural network includes a first sub-network and a second sub-network. The first sub-network can be used for channel estimation of the data pilot symbol. The second sub-network can be used for MIMO channel estimation of the data symbol. In addition, the second sub-network and the third neural network may form an iterative feedback loopback structure. The input of the second sub-network may include the data symbol of the received signal and the output of the third neural network. Channel estimation of the position of the current data symbol is performed by using demodulated data of the current data symbol as a known signal. Subsequently, the channel estimation result updated based on the current symbol and the received data of the subsequent symbol are jointly input into an equalizer network so as to be used in processing the received data of the subsequent symbol. This enables better adaptation to the rapid time-varying characteristics of signals in high-speed channels, thereby improving receiver performance in high-mobility scenarios.

In an embodiment, the signal receiving method also includes determining a first real number array according to the real part and the imaginary part of the data pilot symbol of the received signal; and rearranging the first real number array at a granularity of a processing sub-band to obtain first sub-band received data as input of the first neural network.

In this embodiment, the data pilot symbol $y_{PW}$ of the first symbol (m = 0) is extracted from the received frequency domain signal Y. The pre-demodulation neural network is a real number neural network, so the real part and the imaginary part of $Y_{PW}$ are required to be separated to form a real number array. This array is determined as the first real number array, such as $[R_e(Y_{PW}), Im(Y_{PW})]$. Re (·) and Im (·) represent a real-part extraction operation and an imaginary-part extraction operation respectively. X resource elements (REs) are defined as a processing sub-band as a processing granularity of the neural network model. The first real number array is rearranged at the granularity of the processing sub-band into N pieces of first sub-band received data $Net_{1,in} = [N \times X \times 2]_{ka}$, which are used as the input of the first neural network.

In an embodiment, the signal receiving method also includes generating bitstream data to be modulated and causing the bitstream data to pass through a wireless fading channel to obtain a sample received signal; determining a second real number array according to the real part and the imaginary part of a data pilot symbol of the sample received signal; rearranging the second real number array at the granularity of the processing sub-band to obtain sample sub-band received data; modulating the bitstream data to obtain a real received signal; determining a third real number array according to the real part and the imaginary part of a data pilot symbol of the real received signal; rearranging the third real number array at the granularity of the processing sub-band to obtain label sub-band received data; and training the first neural network according to the sample sub-band received data and the label sub-band received data.

In this embodiment, as shown in FIG. 3, bitstream data $X_{bit}$ to be modulated for generating the data pilot symbol of the transmitting end. The bitstream data passes through a wireless fading channel to obtain a sample received signal received by a receiving end. The real part and the imaginary part of the data pilot symbol are separated according to data pilot symbol data $Y_{PW}$ of the sample received signal to obtain N*X second real number arrays. The composition of a single second real number array is $[Re(Y_{PW}), Im(Y_{PW})]$. The second real number array is rearranged at the granularity of the processing sub-band to obtain sample sub-band received data as a training sample.

The bitstream data $X_{bit}$ of the data pilot symbol at the transmitting end is modulated to generate a real received signal $X_{PW}$. The real part and the imaginary part of the data pilot symbol are separated according to the data pilot symbol of the real received signal to form N*X third real number arrays. The j-th third real number array is as follows:

$$X'_{PW,j} = \begin{bmatrix} Re(X_{PW}) & Im(X_{PW}) \end{bmatrix}$$

. The third real number array is rearranged at the granularity of the processing sub-band. The N*X third real number arrays $X'_{PW}$ are used as the label of the training sample to obtain the label sub-band received data. In this embodiment, in different fading channels, multiple training samples and labels are generated and input into the first neural network for training to obtain estimation values $\hat{X}_{PW}$ (arranged in the same order as the label data) of transmitted signals. A mean square error loss function is calculated using the estimation values of the transmitted signals and the labels $X'_{PW}$.

After the training is completed, the first neural network is deployed at the receiving end at the position shown in FIG. 4 to receive online signal detection. During online signal detection, the processed first real number arrays $Net_{1,in}$ arranged by sub-bands are used as the input of the first neural network for pre-demodulation. After online detection by the first neural network for pre-demodulation, the output $\hat{X}_{PW}$ of the first neural network is obtained.

In an embodiment, a loss function for training the first neural network includes at least one of the following: a binary cross entropy loss function, a Euclidean distance, or a cosine distance.

In this embodiment, the loss function includes, but is not limited to, a binary cross entropy loss function, a Euclidean distance, a cosine distance, or a combination of a Euclidean distance and a cosine distance. Based on the loss function, the neural network is trained using an Adam optimizer. The network training is completed after the loss function converges to a certain degree.

In an embodiment, the signal receiving method also includes performing a hard decision on output of the first neural network according to a data pilot symbol modulation scheme to obtain a first decision result; determining a fourth real number array according to the real part and the imaginary part of the data pilot symbol of the received signal and the real part and the imaginary part of the first decision result; and rearranging the fourth real number array at the granularity of the processing sub-band to obtain second sub-band received data as input of the first sub-network.

In this embodiment, hard decision is performed on the output $\hat{X}_{PW}$ of the first neural network based on the data pilot symbol modulation scheme $Q_{m,PW}$ to obtain a first decision result; and then, a real number array is formed by using the real part and the imaginary part of the received data pilot signal $Y_{PW}$ corresponding to each receive antenna and the real part and the imaginary part of the first decision result. The real number array is determined as the fourth real number array: $[\text{Re}(Y_{PW}),\ \text{Im}(Y_{PW}),\ \text{Re}(\hat{X}_{PW}),\ \text{Im}(\hat{X}_{PW})]$. X resource elements (REs) are defined as a processing sub-band as a processing granularity of the neural network model. The data pilot symbols $Y_{PW}^{ka}$ received on all antennas and the output of the first neural network are rearranged at the granularity of the processing sub-band into N pieces of second sub-band received data $Net_{2\text{-}1,in} = [N \times X \times 4]_{ka}$, which are used as the input of the first sub-network for channel estimation of the data pilot symbol (m = 0).

In an embodiment, the signal receiving method also includes generating data pilot symbol modulation data and causing the data pilot symbol modulation data to pass through a wireless fading channel to obtain a sample data pilot symbol; determining a fifth real number array according to the data pilot symbol modulation data and the real part and the imaginary part of the sample data pilot symbol; rearranging the fifth real number array at the granularity of the processing sub-band to obtain sample sub-band received data; determining a sixth real number array according to the real part and the imaginary part of an ideal channel through which the sample data pilot symbol passes; rearranging the sixth real number array at the granularity of the processing sub-band to obtain label sub-band received data; and training the first sub-network according to the sample sub-band received data and the label sub-band received data.

In this embodiment, as shown in FIG. 3, data pilot symbol modulation data $X_{PW}$ of the transmitting end is generated. The data pilot symbol modulation data passes through a high-speed wireless fading channel to obtain sample data pilot symbol data $Y_{PW}$ received by the receiving end. N*X fifth real number arrays are determined as training samples according to the data pilot symbol modulation data and real and imaginary parts of the sample data pilot symbol. The composition of a single fifth real number array is $[\text{Re}(Y_{PW}),\ \text{I}_m(Y_{PW}),\ \text{Re}(X_{PW}),\ \text{Im}(X_{PW})]$. The fifth real number array is rearranged at the granularity of the processing sub-band to obtain sample sub-band received data.

A full-bandwidth ideal channel $H_{PW}$ through which the sample data pilot symbol passes is acquired. The sixth real number arrays are rearranged at the granularity of the processing sub-band to form N*$X_{out}$ sixth real number arrays $H{'}_{PW}$. The structure of the j-th sixth real number array is as follows: $H'_{PW,j} = [\text{Re}(H_{PW}), \text{Im}(H_{PW})]$. N*$X_{out}$*2 real number arrays $H'_{pw}$ are used as the label sub-band received data of the training sample. Here an output granularity of the neural network is, under both single-stream configuration and dual-stream configuration, defined as: $X_{out}$ = BW/N. In different fading channels, multiple corresponding training samples and labels are generated. Based on the sample sub-band received data and the label sub-band received data, the first sub-network is trained to obtain channel estimation values $\hat{H}_{pw}$ (arranged in the same order as the label data). Then the loss function is calculated using the channel estimation values and the labels $H'_{pw}$. In this embodiment, the loss function includes, but is not limited to, a mean square error (MSE) loss function, a Euclidean distance, a cosine distance, or a combination of a Euclidean distance and a cosine distance. Based on the loss function, the neural network is trained using an Adam optimizer. The network training is completed after the loss function converges to a certain degree.

After the training is completed, the first sub-network is deployed at the receiving end at the position shown in FIG. 4 to receive online signal detection. During online signal detection, the second sub-band received data $Net_{2\text{-}1,in}$ is obtained and used as the input of the first sub-network. After online detection by the first sub-network, the channel estimation result $\hat{H}_{PW}$ output by the first sub-network is obtained.

In this embodiment of the present application, the ideal channel may be understood as an accurate channel estimation result obtained under a known channel condition. The full bandwidth may be understood as an entire bandwidth occupied in the frequency domain by the currently scheduled signal (including sample data pilot symbols or sample data symbols), that is, all processing sub-bands.

In an embodiment, the processing sub-band includes X resource elements (REs).

In response to single-stream configuration, X = BW/N; and in response to dual-stream configuration, X = BW/N/2.

BW denotes the total number of REs of a signal transmission bandwidth, and N denotes the total number of data symbols of the received signal.

In an embodiment, the signal receiving method also includes determining a seventh real number array according to the real part and the imaginary part of frequency domain data of the data symbol and the real part and the imaginary part of a channel estimation result output by the second neural network; and rearranging the seventh real number array at the granularity of the processing sub-band to obtain third sub-band received data as input of the third neural network.

In this embodiment, the seventh real number array is determined according to the real part and the imaginary part of the frequency domain data of the data symbol $Y_{Data}$ and the real part and the imaginary part of the channel estimation result $\hat{H}_{PW}$ output by the second neural network. The seventh real number array is rearranged at the granularity of the processing sub-band to obtain the third sub-band received data $Net_{3,in}$ as the input of the third neural network. The data is used for channel equalization of the first data symbol (m = 1).

In an embodiment, for a first data symbol of the received signal, the input of the third neural network includes frequency domain data of the first data symbol and a channel estimation result of the data pilot symbol of the received signal.

For a data symbol of the received signal other than the first data symbol, the input of the third neural network includes frequency domain data of the data symbol and a channel estimation result of a previous data symbol.

In this embodiment, the third neural network and the second sub-network are of a cyclic iterative architecture with the symbol m as a granularity. When m = 1, equalization processing is performed on the first data symbol, and the frequency domain data $Y_{Data}^{m=1}$ of the first data symbol and the channel estimation result $\hat{H}_{PW}$ of the received signal data pilot symbol are used as the input of the third neural network. When m > 1, equalization processing is sequentially performed on subsequent data symbols, and the frequency domain data $Y_{Data}^{m}$ of the data symbol m and the channel estimation output $\hat{H}_{Data}^{m-1}$ of the second sub-network corresponding to the previous data symbol m - 1 are used as the input of the third neural network. The neural network input compositions in these two cases are the same. Using m > 1 as an example, the input data real number array $Net_{3,in}$ is formed according to the following construction method: single-stream configuration composition $[ \mathrm{Re}(Y_{Data}^{m}), \mathrm{Im}(Y_{Data}^{m}), \mathrm{Re}(\hat{H}_{Data}^{m-1}), \ \mathrm{Im}(\hat{H}_{Data}^{m-1}) ]$; MIMO dual-stream configuration composition $[ \mathrm{Re}(Y_{Data}^{m,ka1}), \mathrm{Im}(Y_{Data}^{m,ka1}), \mathrm{Re}(Y_{Data}^{m,ka2}),$

$\mathrm{Im}(Y_{Data}^{m,ka2}), \ \mathrm{Re}(\hat{H}_{Data}^{m-1,p0ka1}), \ \mathrm{Im}(\hat{H}_{Data}^{m-1,p0ka1}), \ \mathrm{Re}(\hat{H}_{Data}^{m-1,p0ka2}), \ \mathrm{Im}(\hat{H}_{Data}^{m-1,p0ka2}), \ \mathrm{Re}(\hat{H}_{Data}^{m-1,p1ka1}),$

$\mathrm{Im}(\hat{H}_{Data}^{m-1,p1ka1}), \mathrm{Re}(\hat{H}_{Data}^{m-1,p1ka2}), \mathrm{Im}(\hat{H}_{Data}^{m-1,p1ka2}) ]$.

X resource elements (REs) are defined as a processing sub-band as a processing granularity of the neural network model. The data symbols $Y_{Data}^{m}$ and $\hat{H}_{Data}^{m-1}$ received on all antennas are rearranged at the granularity of the processing sub-band to obtain N pieces of sub-band data. The single-stream configuration input is $Net_{3,in} = [N \times X \times 4]$. The MIMO dual-stream configuration input is $Net_{3,in} = [N \times X \times 12]$.

In an embodiment, a channel equalization result of the third neural network for the m-th data symbol of the received data is configured for updating a channel estimation result of the second sub-network for the m-th data symbol.

The (m + 1)-th data symbol of the received data and the updated channel estimation result of the m-th data symbol serve as input of the third neural network.

In this embodiment, the channel equalization result of the m-th data symbol is used to update channel estimation of the current symbol. After calculation, the updated channel estimation result of the m-th symbol of the second sub-network is obtained. The updated channel estimation result of the m-th symbol and the received data of the (m + 1)-th data symbol are combined and input to a channel equalization network for equalization computation of the (m + 1)-th symbol until channel equalization of all data symbols is completed. Subsequently, demodulation and decoding of a conventional receiver are performed.

In an embodiment, the signal receiving method also includes generating data symbol modulation data and causing the data symbol modulation data to pass through a wireless fading channel to obtain sample data symbol; determining an eighth real number array according to the real part and the imaginary part of the sample data symbol and the real part and the imaginary part of an ideal channel through which the sample data symbol passes; rearranging the eighth real number array at the granularity of the processing sub-band to obtain sample sub-band received data; determining a ninth real number array according to the real part and the imaginary part of the data symbol modulation data; rearranging the ninth real number array at the granularity of the processing sub-band to obtain label sub-band received data; and training the third neural network according to the sample sub-band received data and the label sub-band received data.

In this embodiment, as shown in FIG. 3, transmitting-end signal processing is performed to generate data symbol modulation data $X_{Data}^{m}$. The data symbol modulation data passes through a high-speed wireless fading channel to obtain the sample data symbol $Y_{Data}^{m}$ of the data symbol m. In addition, the ideal channel $H_{ideal,Data}^{m-1}$ through which the sample data symbol m - 1 passes is obtained. N*X eighth real number arrays are obtained according to the real part and the imaginary part of the sample data symbol and the real part and the imaginary part of the ideal channel through which the sample data symbol passes. The single-stream composition of a single real number array is $[\,\mathrm{Re}(Y_{Data}^{m})\,,\,\mathrm{Im}(Y_{Data}^{m})\,,\,\mathrm{Re}(H_{ideal,Data}^{m-1})\,,\,\mathrm{Im}(H_{ideal,Data}^{m-1})\,]$. The double-stream composition of a single real number array is $[\,\mathrm{Re}(Y_{Data}^{m,ka1})$ $\mathrm{Im}(Y_{Data}^{m,ka1})\,,\,\mathrm{Re}(Y_{Data}^{m,ka2})\,,\,\mathrm{Im}(Y_{Data}^{m,ka2})\,,\,\mathrm{Re}(H_{Data}^{m-1,p0ka1})\,,\,\mathrm{Im}(H_{Data}^{m-1,p0ka1})\,,\,\mathrm{Re}(H_{Data}^{m-1,p0ka2})\,,$ $\mathrm{Im}(H_{Data}^{m-1,p0ka2})\,,\mathrm{Re}(H_{Data}^{m-1,p1ka1})\,,\mathrm{Im}(H_{Data}^{m-1,p1ka1})\,,\mathrm{Re}(H_{Data}^{m-1,p1ka1})\,,\mathrm{Im}(H_{Data}^{m-1,p1ka1})\,]$. The eighth real number array is rearranged at the granularity of the processing sub-band to obtain sample sub-band received data.

Then the data symbol modulation data $X_{Data}^{m}$ of the transmitting-end symbol m is obtained. The real part and the imaginary part of the data symbol modulation data $X_{Data}^{m}$ are separated to form N*X ninth real number arrays. For the j-th real number array, the single-stream composition is as follows: $X'_{Data,m,j}=[\mathrm{Re}(X_{Data}^{m}),\mathrm{Im}(X_{Data}^{m})]$, and the dual-stream composition is as follows: $X'_{Data,m,j}=[\mathrm{Re}(X_{Data}^{p0}),\mathrm{Im}(X_{Data}^{p0}),\mathrm{Re}(X_{Data}^{p1}),\mathrm{Im}(X_{Data}^{p1})]$. The ninth real number array is rearranged at the granularity of the processing sub-band to obtain label sub-band received data. The label sub-band received data is used as the training label of the third neural network. In this embodiment, the N*X ninth real number arrays $X'_{Data,m}$ are used as the label of the training sample. In different fading channels, multiple training samples and labels are generated and input into the third neural network for training to obtain estimation values $\hat{X}_{Data}^{m}$ (arranged in the same order as the label data) of transmitted signals. The mean square error loss function is calculated using the estimation values of the transmitted signals and the labels $X'_{Data,m}$. In this embodiment, the loss function includes, but is not limited to, a mean square error (MSE) loss function, a Euclidean distance, a cosine distance, or a combination of a Euclidean distance and a cosine distance. Based on the loss function, the neural network is trained using an Adam optimizer. The network training is completed after the loss function converges to a certain degree.

After the training of the third neural network is completed, the third neural network may be deployed at the receiving end at the position shown in FIG. 4 to receive online signal detection. During online signal detection, the seventh real number array is determined according to the real part and the imaginary part of the frequency domain data of the data symbol and the real part and the imaginary part of the channel estimation result output by the second neural network. The seventh real number array is rearranged at the granularity of the processing sub-band to obtain the third sub-band received data $Net_{3,in}$, as the input of the third neural network. After online detection by the third neural network, the output $\hat{X}_{Data}^{m}$ of the third neural network is obtained. $\hat{X}_{Data}^{m}$ is a real number array. The array is required to be combined into a complex value and then subjected to hard-decision processing based on modulation constellation points.

In an embodiment, the signal receiving method also includes combining the output of the third neural network into a complex value, performing a hard decision on the complex value based on modulation constellation points, and obtaining a second decision result; determining a tenth real number array according to the real part and the imaginary part of the data symbol of the received signal and the real part and the imaginary part of the second decision result; and rearranging the tenth real number array at the granularity of the processing sub-band to obtain fourth sub-band received data as the input of the second sub-network.

In this embodiment, the output $\hat{X}_{Data}^{m}$ of the third neural network is combined into a complex value, a hard decision on the complex value is performed based on modulation constellation points, and a second decision result is obtained. The tenth real number array is determined according to the real part and the imaginary part of the data symbol of the received data signal $Y_{Data}^{m}$ corresponding to each receive antenna and the real part and the imaginary part of the second decision result $\hat{X}_{Data}^m$ output by the third neural network. The single-stream composition is

$$[\,\mathrm{Re}(Y_{Data}^m),\ \mathrm{Im}(Y_{Data}^m),\ \mathrm{Re}(\hat{X}_{Data}^m),\ \mathrm{Im}(\hat{X}_{Data}^m)\,]\,.\quad\text{The dual-stream composition is}$$

$$[\,\mathrm{Re}(Y_{Data}^{m,ka1}),\ \mathrm{Im}(Y_{Data}^{m,ka1}),\ \mathrm{Re}(Y_{Data}^{m,ka2}),\ \mathrm{Im}(Y_{Data}^{m,ka2}),\ \mathrm{Re}(\hat{X}_{Data}^{m,p0}),\ \mathrm{Im}(\hat{X}_{Data}^{m,p0}),\ \mathrm{Re}(\hat{X}_{Data}^{m,p1}),$$

$\mathrm{Im}(\hat{X}_{Data}^{m,p1})\,]$. X resource elements (REs) are defined as a processing sub-band as a processing granularity of the neural network model. The tenth real number array is rearranged at the granularity of the processing sub-band to obtain N pieces of fourth sub-band received data. The single-stream configuration is $Net_{2,in} = [N \times X \times 4]_{ka}$. The dual-stream configuration is $Net_{2,in} = [N \times X \times 8]_{ka}$. The fourth sub-band received data is used as the input of the second sub-network for channel estimation of the symbol m.

In an embodiment, the signal receiving method also includes generating data symbol modulation data and causing the data symbol modulation data to pass through a wireless fading channel to obtain sample data symbol; determining an eleventh real number array according to the real part and the imaginary part of the data symbol modulation data and the real part and the imaginary part of the sample data symbol; rearranging the eleventh real number array at the granularity of the processing sub-band to obtain sample sub-band received data; determining a twelfth real number array according to the real part and the imaginary part of an ideal channel through which the sample data symbol passes; rearranging the twelfth real number array at the granularity of the processing sub-band to obtain label sub-band received data; and training the second sub-network according to the sample sub-band received data and the label sub-band received data.

In this embodiment, as shown in FIG. 3, the data symbol modulation data $X_{Data}^m$ of the transmitting end is generated. The data symbol modulation data $X_{Data}^m$ passes through a high-speed wireless fading channel to obtain sample data symbol data $Y_{Data}^m$ received by the receiving end. N*X eleventh real number arrays are obtained as training samples according to the real part and the imaginary part of the data symbol modulation data and the real part and the imaginary part of the sample data symbol. For a single real number array, the single-stream composition is

$$[\,\mathrm{Re}(Y_{Data}^m),\mathrm{Im}(Y_{Data}^m),\mathrm{Re}(X_{Data}^m),\mathrm{Im}(X_{Data}^m)\,]\,,\quad\text{and the dual-stream composition is}$$

$$[\,\mathrm{Re}(Y_{Data}^{m,ka1}),\ \mathrm{Im}(Y_{Data}^{m,ka1}),\ \mathrm{Re}(Y_{Data}^{m,ka2}),\ \mathrm{Im}(Y_{Data}^{m,ka2}),\ \mathrm{Re}(X_{Data}^{m,p0}),\ \mathrm{Im}(X_{Data}^{m,p0}),\ \mathrm{Re}(X_{Data}^{m,p1}),$$

$\mathrm{Im}(X_{Data}^{m,p1})\,]$. The eleventh real number array is rearranged at the granularity of the processing sub-band to obtain sample sub-band received data. The sample sub-band received data is used as the training sample.

The twelfth real number array is determined according to the real part and the imaginary part of a full-bandwidth ideal channel $H_{Data}^m$ through which the sample data symbol data $Y_{Data}^m$ passes. Rearrangement is performed at the granularity of the processing sub-band to obtain $N*X_{out}$ twelfth real number arrays $H'_{Data,m}$. For the j-th real number array, the composition is as follows:

$$H'_{Data,m,j} = [\mathrm{Re}(H_{Data}),\mathrm{Im}(H_{Data})]\,.$$

Single stream:

Dual stream:

$$H'_{Data,m,j} = [\mathrm{Re}(H_{Data}^{p0ka1}),\mathrm{Im}(H_{Data}^{p0ka1}),\mathrm{Re}(H_{Data}^{p0ka2}),\mathrm{Im}(H_{Data}^{p0ka2}),\mathrm{Re}(H_{Data}^{p1ka1}),\mathrm{Im}(H_{Data}^{p1ka1}),\mathrm{Re}(H_{Data}^{p1ka2}),\mathrm{Im}(H_{Data}^{p1ka2})]$$

. The label sub-band received data obtained from single-stream $[N*X_{out}*2]$/dual-stream $[N*X_{out}*8]$ real number arrays $H'_{Data,m}$ serves as the label of the training sample. Here an output granularity of the neural network is, under both single-stream configuration and dual-stream configuration, defined as: $X_{out} = BW/N$. In different fading channels, according to the sample sub-band received data and the label sub-band received data, multiple corresponding training samples and labels are generated and input into the second sub-network for training to obtain channel estimation values $\hat{H}_{Data}^m$ (arranged in the same order as the label data). Then the loss function is calculated using the channel estimation values and the labels

$H'_{Data,m}$ . Based on the loss function, the neural network is trained using an Adam optimizer. The network training is completed after the loss function converges to a certain degree.

After the training is completed, the second sub-network is deployed at the receiving end at the position shown in FIG. 4 to receive online signal detection. During online signal detection, the output of the third neural network is combined into a complex value, a hard decision on the complex value is performed based on modulation constellation points, and a second decision result is obtained; a tenth real number array is determined according to the real part and the imaginary part of the data symbol of the received signal and the real part and the imaginary part of the second decision result; and the tenth real number array is rearranged at the granularity of the processing sub-band to obtain fourth sub-band received data $Net_{2,in}$ as the input of the second sub-network. After the online detection of the second sub-network, the output $\hat{H}_{Data}^{m}$ of the second sub-network is obtained as the channel estimation result of the m-th symbol, which is used for channel equalization of the data of the symbol m + 1.

In an embodiment, a loss function for training the second neural network or the third neural network includes at least one of the following: a mean square error loss function, a Euclidean distance, or a cosine distance.

The following describes the signal receiving method by using examples.

Example 1

A pilot-free communication system in a high-speed scenario is assumed. In the OFDM MIMO system, the user data is dual streams, the transmitting end has P = 2 antenna ports and Tx = 2 physical transmit antennas, and the receiving end has Rx = 2 physical receive antennas. The number of resource blocks (RBs) scheduled for data pilot symbols and data symbols in the frequency domain is $N_{RB}$ = 24. The 24 RBs may be further divided into $N_{sub}$ = 4 sub-bands. Each sub-band $RE_{data}$ = 6*12 = 72 subcarriers. The data pilot occupies N = 1 OFDM symbol and corresponds to a modulation scheme $Q_{m,PW}$ = 2, namely, quadrature phase-shift keying (QPSK) modulation. Data pilot symbols of different data streams are arranged in the frequency domain in an inter-stream interleaved manner such that each layer occupies $RE_{PW}$ = 36 subcarriers. The data occupies M = 13 OFDM symbols and corresponds to a modulation scheme $Q_{m,data}$ = 4, namely, 16-quadrature amplitude modulation (16-QAM).

This example describes the steps of constructing the input of a data pilot symbol pre-demodulation neural network Net1 (that is, the first neural network) and obtaining the frequency domain estimation value $\hat{X}_{PW}$ of the sent data pilot symbol through online detection of the data pilot symbol pre-demodulation neural network Net1. The data has all been normalized by default.

(1) Generation of frequency domain data

The frequency-domain signal $Y$ received by two receive antennas is divided on a symbol basis into frequency domain data of data pilot symbols and frequency domain data of data symbols. Since the system is a dual-stream MIMO system with inter-stream interleaved data pilots, the two receive antennas $RKa$ = 1, 2 receive data transmitted from two transmit ports P = 1, 2 (port 1 is at even subcarriers and port 2 is at odd subcarriers). $Y_{PW}^{ij}$ is used to denote a frequency-domain data pilot signal received by the i-th receive antenna from the j-th transmit port. Accordingly, the data pilot symbols can be extracted and decomposed into the following matrix:

$$Y_{PW} = \begin{bmatrix} Y_{PW}^{11} & Y_{PW}^{12} \\ Y_{PW}^{21} & Y_{PW}^{22} \end{bmatrix}$$

The dimensions are P*Rx*(N* $N_{sub}$)* $RE_{PW}$, that is, 22*4*36. The receive antennas corresponding to different ports are extracted for pre-demodulation processing. The extraction matrix is $Y_{PW} = \begin{bmatrix} Y_{PW}^{11}, & Y_{PW}^{22} \end{bmatrix}$. The format is rearranged into an 8*36 data array.

(2) Construction of the input of the neural network model Net1

The input granularity of the data pilot symbol pre-demodulation neural network model Net1 is $RE_{PW}$ = 36 of each sub-band per stream. The frequency domain data of the data pilot symbol is divided according to this granularity. The imaginary part and the real part are separated. A real number array is formed according to the structure of [Re($Y_{PW}$),

Im($Y_{PW}$)] to serve as the input $Net_{1,in}$ of the pre-demodulation neural network Netl. The dimensions of the real number array are 8*36*2.

(3) Generation of training samples and labels and model training of Net1

The transmitted bit stream $X_{bit}$ is subjected to transmitting-end signal processing as shown in FIG. 3. After the transmitted bit stream $X_{bit}$ passes through the high-speed channel, the frequency domain signal $Y_{PW}$ of the data pilot of step (1) is obtained. A real number array is constructed as a training sample according to the format of step (2). The dimensions of the real number array are 8*36*2. The data pilot $X_{PW}$ generated from the bit stream $X_{bit}$ at the transmitting end is also subjected to rearrangement of real and imaginary parts according to step (1) to obtain

$$X'_{PW,j} = \begin{bmatrix} \mathrm{Re}(X_{PW}) & \mathrm{Im}(X_{PW}) \end{bmatrix}$$ to serve as the training label of the neural network Net1. Its dimensions are 8*36*2.

In different high-speed channel scenarios, multiple training samples are generated in the preceding manner and input into the data pilot pre-demodulation neural network model Net1 for training to obtain the frequency domain estimation value $\hat{X}_{PW}$ of the transmitted data pilot signal. Then the loss function is calculated using $\hat{X}_{PW}$ and the training sample

$$X'_{PW}$$ . The loss function here uses a binary cross-entropy loss function. Based on the loss function, the neural network is trained using an Adam optimizer until the model converges.

(4) Online detection processing of the neural network model Net1

After the training is completed, the Netl is deployed at the receiving end at the position shown in FIG. 4 to receive online signal detection. The real number array $Net_{1,in}$ obtained in step (2) is used as the input of the pre-demodulation neural network, which is a convolutional neural network (CNN), to obtain a pre-demodulation output result $\hat{X}_{PW}$. Its dimensions are 8*36. The output is hard-decided according to the data pilot symbol modulation scheme $Q_{m,PW}$ and then used as the input of a channel estimation neural network Net2-1 for subsequent processing.

Example 2

A pilot-free communication system in a high-speed scenario is assumed. In the OFDM MIMO system, the user data is dual streams, the transmitting end has P = 2 antenna ports and Tx = 2 physical transmit antennas, and the receiving end has Rx = 2 physical receive antennas. The number of resource blocks (RBs) scheduled for data pilot symbols and data symbols in the frequency domain is $N_{RB}$ = 24. The 24 RBs may be further divided into $N_{sub}$ = 4 sub-bands. Each sub-band $RE_{data}$ = 6*12 = 72 subcarriers. The data pilot occupies N = 1 OFDM symbol and corresponds to a modulation scheme $Q_{m,PW}$ = 2 (QPSK modulation). Data pilot symbols of different data streams are arranged in the frequency domain in an inter-stream interleaved manner such that each layer occupies $RE_{PW}$ = 36 subcarriers. The data occupies M = 13 OFDM symbols and corresponds to a modulation scheme $Q_{m,data}$ = 4 (16-QAM modulation).

This example describes the steps of constructing the input of a data pilot symbol channel estimation neural network Net2-1 (that is, the first sub-network) and obtaining the channel estimation result $\hat{H}_{pilot}$ of the data pilot symbol through online detection of the data pilot symbol channel estimation neural network Net2-1. The data has all been normalized by default.

(1) Construction of the input of the neural network model Net2-1

The hard-decision result of the output $\hat{H}_{PW}$ of the pre-demodulation model Net1 and the pilot frequency domain data $Y_{PW}$ of the received data are used as the input of the data pilot channel estimation neural network Net2-1. The input granularity of the neural network is $RE_{PW}$ = 36 of each sub-band per stream. The frequency domain data of the data pilot symbol is divided according to this granularity. The imaginary part and the real part of the frequency domain data are separated. A real number array $Net_{2-1,in}$ of 16*36*4 is formed according to the structure of [Re($Y_{PW}$), Im($Y_{PW}$), Re($\hat{X}_{PW}$), Im($\hat{X}_{PW}$)] to serve as the input of the data pilot channel estimation neural network Net2-1.

(2) Generation of training samples and labels and model training of Net2-1

Transmitting-end signal processing is performed according to FIG. 3. After passing through the high-speed channel, the frequency domain signal $Y_{PW}$ of the data pilot of step (1) is obtained. A real number array is constructed as a training sample according to the format of [Re($Y_{PW}$), Im($Y_{PW}$), Re($Y_{PW}$), Im($Y_{PW}$)]. Its dimensions are 16*36*4. In addition, an ideal channel $H_{ideal,PW}$ with a full-scheduling bandwidth of 24 RBs through which the data pilot symbol passes is obtained. A real number array $H'_{ideal,PW} = \left[ \mathrm{Re}(H_{ideal,PW}) \quad \mathrm{Im}(H_{ideal,PW}) \right]$ is obtained by rearrangement of real and imaginary parts to serve as the training label of the neural network Net2-1. Its dimensions are 16*72*2.

In different scenarios, multiple training samples are generated in the preceding manner and input into the data pilot channel estimation neural network model Net2-1 for training to obtain the channel estimation value $\hat{H}_{PW}$ of the transmitted data pilot signal. Then $\hat{H}_{PW}$ and the training sample $H'_{ideal,PW}$ are input into a mean square error (MSE) loss function to obtain the loss through calculation. The neural network is then trained using an Adam optimizer until the model converges.

(3) Online detection processing of the neural network model Net2-1

After the training is completed, the Net2-1 is deployed at the receiving end at the position shown in FIG. 4 to receive online signal detection. The real number array $Net_{2-1,in}$ obtained in step (1) is used as the input of the data pilot channel estimation neural network, which is a CNN, to obtain an output result $\hat{H}_{PW}$ after channel estimation and interpolation. Its dimensions are 16*72*2. This result is used for channel equalization of the first data symbol.

Example 3

A pilot-free communication system in a high-speed scenario is assumed. In the OFDM MIMO system, the user data is dual streams, the transmitting end has P = 2 antenna ports and Tx = 2 physical transmit antennas, and the receiving end has Rx = 2 physical receive antennas. The number of resource blocks (RBs) scheduled for data pilot symbols and data symbols in the frequency domain is $N_{RB}$ = 24. The 24 RBs may be further divided into $N_{sub}$ = 4 sub-bands. Each sub-band $RE_{data}$ = 6*12 = 72 subcarriers. The data pilot occupies N = 1 OFDM symbol and corresponds to a modulation scheme $Q_{m,PW}$ = 2 (QPSK modulation). Data pilot symbols of different data streams are arranged in the frequency domain in an inter-stream interleaved manner such that each layer occupies $RE_{PW}$ = 36 subcarriers. The data occupies M = 13 OFDM symbols and corresponds to a modulation scheme $Q_{m,data}$ = 4 (16-QAM modulation).

This example describes the steps of constructing the input of a data symbol channel estimation neural network Net2-2 (that is, the second sub-network) and obtaining the channel estimation result $\hat{H}_{Data}$ of the data symbol through online detection of the data symbol channel estimation neural network Net2-2. The data has all been normalized by default.

(1) Construction of the input of the neural network model Net2-2

The hard-decision result of the output $\hat{X}_{Data}^{m}$ (dimensions of the output are 2*4*72, complex value) of a channel equalization neural network model Net3 and the frequency domain data $Y_{Data}^{m}$ (dimensions of the frequency domain data are 2*4*72, complex value) of the currently received data symbol m are used as the input of the data symbol channel estimation neural network Net2-2. The input granularity of the neural network is $RE_{data}$ = 72 of each sub-band per stream. The frequency domain data of the data symbol is divided according to this granularity. The imaginary part and the real part of the frequency domain data are separated. A real number array $Net_{2-2,in}$ of 4*72*8 is formed according to the structure of

$$\left[ \mathrm{Re}(Y_{Data}^{m,ka1}), \quad \mathrm{Im}(Y_{Data}^{m,ka1}), \quad \mathrm{Re}(Y_{Data}^{m,ka2}), \quad \mathrm{Im}(Y_{Data}^{m,ka2}), \quad \mathrm{Re}(\hat{X}_{Data}^{m,p0}), \quad \mathrm{Im}(\hat{X}_{Data}^{m,p0}), \quad \mathrm{Re}(\hat{X}_{Data}^{m,p1}), \right.$$

$$\left. \mathrm{Im}(\hat{X}_{Data}^{m,p1}) \right]$$ to serve as the input of the data symbol channel estimation neural network Net2-2.

(2) Generation of training samples and labels and model training of Net2-2

As shown in FIG. 3, the data symbol modulation data $X_{Data}^{m}$ of the transmitting end is generated. After the data symbol modulation data passes through the high-speed wireless fading channel, the data symbol data $Y_{Data}^{m}$ received by the receiving end is obtained. A real number array is constructed as a training sample according to the format of

$$\left[ \mathrm{Re}(Y_{Data}^{m,ka1}), \right.$$

$$\mathrm{Im}(Y_{Data}^{m,ka1}), \quad \mathrm{Re}(Y_{Data}^{m,ka2}), \quad \mathrm{Im}(Y_{Data}^{m,ka2}), \quad \mathrm{Re}(X_{Data}^{m,p0}), \quad \mathrm{Im}(X_{Data}^{m,p0}), \quad \mathrm{Re}(X_{Data}^{m,p1}), \quad \mathrm{Im}(X_{Data}^{m,p1}) \left. \right]$$ . Its di-

mensions are 4*72*8. In addition, an ideal channel $H_{ideal,Data}^{m}$ through which the data symbol passes is obtained. A real number                array                $H'_{ideal,Data} = [\mathrm{Re}(H^{m,p0ka1}_{ideal,Data}) \quad \mathrm{Im}(H^{m,p0ka1}_{ideal,Data})$

$\mathrm{Re}(H^{m,p0ka2}_{ideal,Data}) \quad \mathrm{Im}(H^{m,p0ka2}_{ideal,Data}) \quad \mathrm{Re}(H^{m,p1ka1}_{ideal,Data}) \quad \mathrm{Im}(H^{m,p1ka1}_{ideal,Data}) \quad \mathrm{Re}(H^{m,p1ka2}_{ideal,Data}) \quad \mathrm{Im}(H^{m,p1ka2}_{ideal,Data})]$ is obtained by rearrangement of real and imaginary parts to serve as the training label of the neural network Net2-2. The dimensions of the real number array are 4*72*8.

In different scenarios, multiple training samples are generated in the preceding manner and input into the data symbol channel estimation neural network model Net2-2 for training to obtain the channel estimation value $\hat{H}^m_{Data}$ of the transmitted data symbol m. Then $\hat{H}^m_{Data}$ and the training sample $H'_{ideal,Data}$ are input into a mean square error (MSE) loss function to obtain the loss through calculation. The neural network is then trained using an Adam optimizer until the model converges.

(3) Online detection processing of the neural network model Net2-2

After the training is completed, the Net2-2 is deployed at the receiving end at the position shown in FIG. 4 to receive online signal detection. The real number array $Net_{2-2,in}$ obtained in step (1) is used as the input of the data symbol channel estimation neural network, which is a neural network, to obtain an output result $\hat{H}^m_{Data}$ after channel estimation and interpolation. Its dimensions are 4*72*8. This result is used for channel equalization of the (m + 1)-th data symbol.

Example 4

A pilot-free communication system in a high-speed scenario is assumed. In the OFDM MIMO system, the user data is dual streams, the transmitting end has P = 2 antenna ports and Tx = 2 physical transmit antennas, and the receiving end has Rx = 2 physical receive antennas. The number of resource blocks (RBs) scheduled for data pilot symbols and data symbols in the frequency domain is $N_{RB}$ = 24. The 24 RBs may be further divided into $N_{sub}$ = 4 sub-bands. Each sub-band $RE_{data}$ = 6*12 = 72 subcarriers. The data pilot occupies N = 1 OFDM symbol and corresponds to a modulation scheme $Q_{m,PW}$ = 2 (QPSK modulation). Data pilot symbols of different data streams are arranged in the frequency domain in an inter-stream interleaved manner such that each layer occupies $RE_{PW}$ = 36 subcarriers. The data occupies M = 13 OFDM symbols and corresponds to a modulation scheme $Q_{m,data}$ = 4 (16-QAM modulation).

This example describes the steps of constructing the input of a channel equalization neural network Net3 (that is, the third neural network) and obtaining the channel equalization result $\hat{X}_{Data}$ through online detection of the channel equalization neural network Net3. The data has all been normalized by default.

(1) Construction of the input of the neural network model Net3

The hard-decision result of the output $\hat{H}^{m-1}_{Data}$ (dimensions of the output are 2*2*4*72, complex value, the first data symbol uses the channel estimation result $\hat{H}_{PW}$ of the data pilot symbols) of the neural network model Net2-2 of the previous data symbol m - 1 and the frequency domain data $Y^m_{Data}$ (dimensions of the frequency domain data are 2*4*72, complex value) of the currently received data symbol m are used as the input of the channel equalization neural network Net3. The input granularity of the neural network is $RE_{data}$ = 72 of each sub-band per stream. The frequency domain data of the data symbol is divided according to this granularity. The imaginary part and the real part of the frequency domain data are separated. A real number array $Net_{3,in}$ of 4*72* 12 is formed according to the structure of

$[ \ \mathrm{Re}(Y^{m,ka1}_{Data}) \ , \quad \mathrm{Im}(Y^{m,ka1}_{Data}) \ , \quad \mathrm{Re}(Y^{m,ka2}_{Data}) \ , \quad \mathrm{Im}(Y^{m,ka2}_{Data}) \ , \quad \mathrm{Re}(\hat{H}^{m-1,p0ka2}_{Data}) \ , \quad \mathrm{Im}(\hat{H}^{m-1,p0ka1}_{Data})$

$\mathrm{Re}(\hat{H}^{m-1,p0ka2}_{Data}) \ , \quad \mathrm{Im}(\hat{H}^{m-1,p0ka2}_{Data}) \ , \quad \mathrm{Re}(\hat{H}^{m-1,p1ka1}_{Data}) \ , \quad \mathrm{Im}(\hat{H}^{m-1,p1ka1}_{Data}) \ , \quad \mathrm{Re}(\hat{H}^{m-1,p1ka2}_{Data}) \ ,$

$\mathrm{Im}(\hat{H}^{m-1,p1ka2}_{Data})]$ to serve as the input of the channel equalization neural network Net3.

(2) Generation of training samples and labels and model training of Net3

Transmitting-end signal processing is performed according to FIG. 3. After passing through the high-speed channel, the frequency domain signal $Y_{Data}^m$ of the data pilot of step (1) is obtained. Additionally, an ideal channel $H_{ideal,Data}^{m-1}$ passed through by data symbol m - 1 is obtained. A real number array is constructed as a training sample according to the format of

$$[ \ Re(Y_{Data}^{m,ka1}) \ , \ \ Im(Y_{Data}^{m,ka1}) \ , \ \ Re(Y_{Data}^{m,ka2}) \ , \ \ Im(Y_{Data}^{m,ka2}) \ , \ \ Re(H_{ideal,Data}^{m-1,p0ka1}) \ , \ \ Im(H_{ideal,Data}^{m-1,p0ka1}) \ ,$$

$$Re(H_{ideal,Data}^{m-1,p0ka2}) \ , \ \ Im(H_{ideal,Data}^{m-1,p0ka2}) \ , \ \ Re(H_{ideal,Data}^{m-1,p1ka1}) \ , \ \ Im(H_{ideal,Data}^{m-1,p1ka1}) \ , \ \ Re(H_{ideal,Data}^{m-1,p1ka2}) \ ,$$

$Im(H_{ideal,Data}^{m-1,p1ka2})]$. Its dimensions are 4*72*12. Then the frequency domain modulation data $X_{data}^m$ of the transmitting-end symbol m is obtained. A real number array is constructed according to

$$[Re(X_{Data}^{m,p0}), \ Im(X_{Data}^{m,p0}), \ Re(X_{Data}^{m,p1}), \ Im(X_{Data}^{m,p1})]$$ to serve as the training label of the neural network Net3. Its dimensions are 4*72*4.

In different high-speed channel scenarios, multiple training samples are generated in the preceding manner and input into the channel equalization neural network model Net3 for training to obtain the channel equalization result estimation value $\hat{X}_{Data}^m$ of the transmitted data symbol m. Then $\hat{X}_{Data}^m$ and the training sample $X_{Data}^m$ are input into a mean square error (MSE) loss function to obtain the loss through calculation. The neural network is then trained using an Adam optimizer until the model converges.

(3) Online detection processing of the neural network model Net3

After the training is completed, the Net3 is deployed at the receiving end at the position shown in FIG. 4 to receive online signal detection. The real number array $Net_{3,in}$ obtained in step (1) is used as the input of the channel equalization neural network, which is a convolutional neural network (CNN), to obtain an equalization network output result $\hat{X}_{Data}^m$. Its dimensions are 4*72*4.

The output is 4*72 real arrays constructed according to the format of

$$[Re(\hat{X}_{Data}^{m,p0}) \ Im(\hat{X}_{Data}^{m,p0}) \ \ Re(\hat{X}_{Data}^{m,p1}) \ \ Im(\hat{X}_{Data}^{m,p1})]$$ . Each array can be combined into complex values on two ports. Hard-decision processing is performed on the combined 4*72*2 complex-valued data based on modulation constellation points. The real and imaginary parts of the hard-decision result are re-expanded to obtain a real number array of dimensions 4*72*4. The array is used for channel estimation of the (m + 1)-th data symbol and subsequent receiver processing.

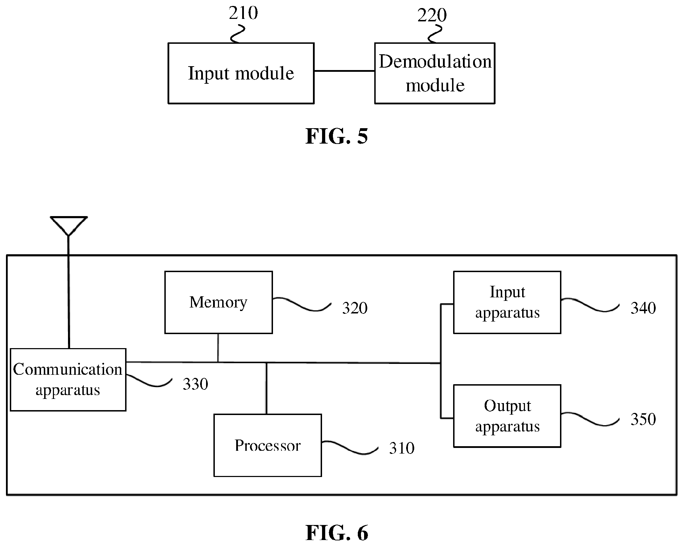

Embodiments of the present application also provide a signal receiving apparatus. FIG. 5 is a diagram illustrating the structure of a signal receiving apparatus according to an embodiment. As shown in FIG. 5, the signal receiving apparatus includes an input module 210 and a demodulation module 220.

The input module 210 is configured to input a received signal to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal.

The demodulation module 220 is configured to demodulate the output signal to obtain received data.

The signal receiving apparatus of this embodiment is a high-speed receiver system based on data-model dual-driven cascaded neural networks. The signal receiving apparatus can implement signal detection functions of a conventional communication receiver in high-speed scenarios. The design of AI modules for MIMO channel estimation and channel equalization supports both single-stream and multi-stream signal configurations and can achieve a certain degree of performance improvement compared with conventional receivers in high-speed scenarios. By introducing the concept of data pilot symbols into input data, the signal receiving apparatus of this embodiment avoids the problem in conventional communication systems in which pilot symbols occupy data symbol resources, thereby improving the system throughput. In addition, the data pilot symbols and the data symbols flexibly support respective configuration of the number of symbols and configuration of the modulation scheme to meet performance requirements in high-speed communication scenarios.

In an embodiment, the second neural network includes a first sub-network for performing channel estimation on the data pilot symbol of the received signal and a second sub-network for performing channel estimation on the data symbol of the received signal.

Input of the second sub-network includes the data symbol of the received signal and output of the third neural network.

In an embodiment, the signal receiving apparatus also includes a first determination module and a first rearrangement module.

The first determination module is configured to determine a first real number array according to the real part and the imaginary part of the data pilot symbol of the received signal.

The first rearrangement module is configured to rearrange the first real number array at the granularity of the processing sub-band to obtain first sub-band received data as input of the first neural network.

In an embodiment, the signal receiving apparatus also includes a first generation module, a second determination module, a second rearrangement module, a modulation module, a third determination module, a third rearrangement module, and a first training module.

The first generation module is configured to generate bitstream data to be modulated and cause the bitstream data to pass through a wireless fading channel to obtain a sample received signal.

The second determination module is configured to determine a second real number array according to the real part and the imaginary part of the data pilot symbol of the received signal.

The second rearrangement module is configured to rearrange the second real number array at the granularity of the processing sub-band to obtain sample sub-band received data.

The modulation module is configured to modulate the bitstream data to obtain a real received signal.

The third determination module is configured to determine a third real number array according to the real part and the imaginary part of the data pilot symbol of the real received signal.

The third rearrangement module is configured to rearrange the third real number array at the granularity of the processing sub-band to obtain label sub-band received data.

The first training module is configured to train the first neural network according to the sample sub-band received data and the label sub-band received data.

In an embodiment, a loss function for training the first neural network includes at least one of the following: a binary cross entropy loss function, a Euclidean distance, or a cosine distance.

In an embodiment, the signal receiving apparatus also includes a first decision module, a fourth determination module, and a fourth rearrangement module.

The first decision module is configured to perform a hard decision on output of the first neural network according to a data pilot symbol modulation scheme to obtain a first decision result.

The fourth determination module is configured to determine a fourth real number array according to the real part and the imaginary part of the data pilot symbol of the received signal and the real part and the imaginary part of the first decision result.

The fourth rearrangement module is configured to rearrange the fourth real number array at the granularity of the processing sub-band to obtain second sub-band received data as input of the first sub-network.

In an embodiment, the signal receiving apparatus also includes a second generation module, a fifth determination module, a fifth rearranging module, a sixth determination module, a sixth rearrangement module, and a second training module.

The second generation module is configured to generate data pilot symbol modulation data and cause the data pilot symbol modulation data to pass through a wireless fading channel to obtain a sample data pilot symbol.

The fifth determination module is configured to determine a fifth real number array according to the data pilot symbol modulation data and the real part and the imaginary part of the sample data pilot symbol.

The fifth rearrangement module is configured to rearrange the fifth real number array at the granularity of the processing sub-band to obtain sample sub-band received data.

The sixth determination module is configured to determine a sixth real number array according to the real part and the imaginary part of an ideal channel through which the sample data pilot symbol passes.

The sixth rearrangement module is configured to rearrange the sixth real number array at the granularity of the processing sub-band to obtain label sub-band received data.

The second training module is configured to train the first sub-network according to the sample sub-band received data and the label sub-band received data.

In an embodiment, the processing sub-band includes X resource elements (REs).

In response to single-stream configuration, $X = BW/N$; and in response to dual-stream configuration, $X = BW/N/2$.

BW denotes the total number of REs of a signal transmission bandwidth, and N denotes the total number of data symbols of the received signal.

In an embodiment, the signal receiving apparatus also includes a seventh determination module and a seventh rearrangement module.

The seventh determination module is configured to determine a seventh real number array according to the real part and the imaginary part of frequency domain data of the data symbol and the real part and the imaginary part of a channel estimation result output by the second neural network.

The seventh rearrangement module is configured to rearrange the seventh real number array at the granularity of the processing sub-band to obtain third sub-band received data as input of the third neural network.

In an embodiment, for a first data symbol of the received signal, the input of the third neural network includes frequency domain data of the first data symbol and a channel estimation result of the data pilot symbol of the received signal.

For a data symbol of the received signal other than the first data symbol, the input of the third neural network includes frequency domain data of the data symbol and a channel estimation result of a previous data symbol.

In an embodiment, a channel equalization result of the third neural network for the m-th data symbol of the received data is configured for updating a channel estimation result of the second sub-network for the m-th data symbol.

The (m + 1)-th data symbol of the received data and the updated channel estimation result of the m-th data symbol serve as input of the third neural network.

In an embodiment, the signal receiving apparatus also includes a third generation module, an eighth determination module, an eighth rearrangement module, a ninth determination module, a ninth rearrangement module, and a third training module.

The third generation module is configured to generate data symbol modulation data and cause the data symbol modulation data to pass through a wireless fading channel to obtain sample data symbol.

The eighth determination module is configured to determine an eighth real number array according to the real part and the imaginary part of the sample data symbol and the real part and the imaginary part of an ideal channel through which the sample data symbol passes.

The eighth rearrangement module is configured to rearrange the eighth real number array at the granularity of the processing sub-band to obtain sample sub-band received data.

The ninth determination module is configured to determine a ninth real number array according to the real part and the imaginary part of the data symbol modulation data.

The ninth rearrangement module is configured to rearrange the ninth real number array at the granularity of the processing sub-band to obtain label sub-band received data.

The third training module is configured to train the third neural network according to the sample sub-band received data and the label sub-band received data.

In an embodiment, the signal receiving apparatus also includes a second decision module, a tenth determination module, and a tenth rearrangement module.

The second decision module is configured to combine the output of the third neural network into a complex value, perform a hard decision on the complex value based on modulation constellation points, and obtain a second decision result.

The tenth determination module is configured to determine a tenth real number array according to the real part and the imaginary part of the data symbol of the received signal and the real part and the imaginary part of the second decision result.

The tenth rearrangement module is configured to rearrange the tenth real number array at the granularity of the processing sub-band to obtain fourth sub-band received data as the input of the second sub-network.

In an embodiment, the signal receiving apparatus also includes a fourth generation module, an eleventh determination module, an eleventh rearrangement module, a twelfth determination module, a twelfth rearrangement module, and a fourth training module.

The fourth generation module is configured to generate data symbol modulation data and cause the data symbol modulation data to pass through a wireless fading channel to obtain sample data symbol.

The eleventh determination module is configured to determine an eleventh real number array according to the real part and the imaginary part of the data symbol modulation data and the real part and the imaginary part of the sample data symbol.

The eleventh rearrangement module is configured to rearrange the eleventh real number array at the granularity of the processing sub-band to obtain sample sub-band received data.

The twelfth determination module is configured to determine a twelfth real number array according to the real part and the imaginary part of an ideal channel through which the sample data symbol passes.

The twelfth rearrangement module is configured to rearrange the twelfth real number array at the granularity of the processing sub-band to obtain label sub-band received data.

The fourth training module is configured to train the second sub-network according to the sample sub-band received data and the label sub-band received data.

In an embodiment, a loss function for training the second neural network or the third neural network includes at least one of the following: a mean square error loss function, a Euclidean distance, or a cosine distance.

The signal receiving apparatus of this embodiment and the signal receiving method of any previous embodiment belong to the same inventive concept. For technical details not described in detail in this embodiment, see any previous embodiment. This embodiment has the same beneficial effects as the signal receiving method performed.

Embodiments of the present application also provide a communication node. FIG. 6 is a diagram illustrating a hardware structure of a communication node according to an embodiment. As shown in FIG. 6, the communication node of the present application includes a processor 310 and a memory 320. One or more processors 310 are configured in the communication node. FIG. 6 illustrates one processor 310 by way of example. The memory 320 is configured to store one or more programs. The one or more programs are executed by the one or more processors 310 to cause the one or more processors 310 to perform the signal receiving method of any embodiment of the present application.

The communication node also includes a communication apparatus 330, an input apparatus 340, and an output apparatus 350.

The processor 310, the memory 320, the communication apparatus 330, the input apparatus 340, and the output apparatus 350 in the communication node may be connected via a bus or in other manners, and the connection via a bus is shown as an example in FIG. 6.

The input apparatus 340 may be configured to receive inputted digital or character information and generate key signal input related to user settings and function control of the electronic device. The output apparatus 350 may include a display device such as a display screen.

The communication apparatus 330 may include a receiver and a sender. The communication apparatus 330 is configured to perform information transceiving communication under the control of the processor 310.

As a computer-readable storage medium, the memory 320 may be configured to store software programs, computer-executable programs, and modules, such as program instructions/modules (for example, the input module 210 and the demodulation module 220 of the signal receiving apparatus) corresponding to the signal receiving method of any embodiment of the present application. The memory 320 may include a program storage region and a data storage region, where the program storage region may store an operating system and an application program required by at least one function, and the data storage region may store data and the like created according to the use of the communication node. In addition, the memory 320 may include a high-speed random-access memory and may also include a nonvolatile memory such as at least one disk memory, a flash memory, or another nonvolatile solid-state memory. In some examples, the memory 320 may also include memories remote relative to the processor 310 and accessible to the communication node via a network. Examples of the network include, but are not limited to, the Internet, an intranet, a local area network, a mobile communication network, and a combination thereof.

Embodiments of the present application also provide a storage medium. The storage medium stores a computer program which, when executed by a processor, causes the processor to perform the signal receiving method of any embodiment of the present application. The signal receiving method is applied to a communication node. The signal receiving method includes inputting a received signal to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal; and demodulating the output signal to obtain received data.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1.  A signal receiving method, comprising:

    inputting a received signal to a receiver to obtain an output signal, wherein the received signal comprises a data pilot symbol and a data symbol, and the receiver comprises the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal; and
    demodulating the output signal to obtain received data.

2.  The method of claim 1, wherein the second neural network comprises a first sub-network for performing channel estimation on the data pilot symbol of the received signal and a second sub-network for performing channel estimation on the data symbol of the received signal; and
    input of the second sub-network comprises the data symbol of the received signal and output of the third neural network.

3.  The method of claim 1, further comprising:

    determining a first real number array according to a real part and an imaginary part of the data pilot symbol of the received signal; and
    rearranging the first real number array at a granularity of a processing sub-band to obtain first sub-band received data as input of the first neural network.

4.  The method of claim 1, further comprising:

    generating bitstream data to be modulated and causing the bitstream data to pass through a wireless fading channel to obtain a sample received signal;
    determining a second real number array according to a real part and an imaginary part of a data pilot symbol of the sample received signal;
    rearranging the second real number array at a granularity of a processing sub-band to obtain first sample sub-band received data;
    modulating the bitstream data to obtain a real received signal;
    determining a third real number array according to a real part and an imaginary part of a data pilot symbol of the real received signal;
    rearranging the third real number array at the granularity of the processing sub-band to obtain first label sub-band received data; and
    training the first neural network according to the first sample sub-band received data and the first label sub-band received data.

5.  The method of claim 1, wherein a loss function for training the first neural network comprises at least one of the following: a binary cross entropy loss function, a Euclidean distance, or a cosine distance.

6.  The method of claim 2, further comprising:

    performing a hard decision on output of the first neural network according to a data pilot symbol modulation scheme to obtain a first decision result;
    determining a fourth real number array according to a real part and an imaginary part of the data pilot symbol of the received signal and a real part and an imaginary part of the first decision result; and
    rearranging the fourth real number array at a granularity of a processing sub-band to obtain second sub-band received data as input of the first sub-network.

7.  The method of claim 2, further comprising:

    generating data pilot symbol modulation data and causing the data pilot symbol modulation data to pass through a wireless fading channel to obtain a sample data pilot symbol;
    determining a fifth real number array according to the data pilot symbol modulation data and a real part and an imaginary part of the sample data pilot symbol;
    rearranging the fifth real number array at a granularity of a processing sub-band to obtain second sample sub-band received data;
    determining a sixth real number array according to a real part and an imaginary part of an ideal channel through which the sample data pilot symbol passes;
    rearranging the sixth real number array at the granularity of the processing sub-band to obtain second label sub-band received data; and
    training the first sub-network according to the second sample sub-band received data and the second label sub-band received data.

8.  The method of claim 6, wherein the processing sub-band comprises X resource elements (REs);

    in response to single-stream configuration, X = BW/N; and in response to dual-stream configuration, X = BW/N/2; and
    BW denotes a total number of REs of a signal transmission bandwidth, and N denotes a total number of data symbols of the received signal.

9.  The method of claim 1, further comprising:

    determining a seventh real number array according to a real part and an imaginary part of frequency domain data of the data symbol and a real part and an imaginary part of a channel estimation result output by the second neural network; and
    rearranging the seventh real number array at the granularity of the processing sub-band to obtain third sub-band received data as input of the third neural network.

10. The method of claim 9, wherein

for a first data symbol of the received signal, the input of the third neural network comprises frequency domain data of the first data symbol and a channel estimation result of the data pilot symbol of the received signal; and for a data symbol of the received signal other than the first data symbol, the input of the third neural network comprises frequency domain data of the data symbol and a channel estimation result of a previous data symbol.

11. The method of claim 2, wherein

a channel equalization result of the third neural network for an m-th data symbol of the received data is configured for updating a channel estimation result of the second sub-network for the m-th data symbol; and an (m + 1)-th data symbol of the received data and the updated channel estimation result of the m-th data symbol serve as input of the third neural network.

12. The method of claim 1, further comprising:

generating data symbol modulation data and causing the data symbol modulation data to pass through a wireless fading channel to obtain sample data symbol; determining an eighth real number array according to a real part and an imaginary part of the sample data symbol and a real part and an imaginary part of an ideal channel through which the sample data symbol passes; rearranging the eighth real number array at a granularity of a processing sub-band to obtain third sample sub-band received data; determining a ninth real number array according to a real part and an imaginary part of the data symbol modulation data; rearranging the ninth real number array at the granularity of the processing sub-band to obtain third label sub-band received data; and training the third neural network according to the third sample sub-band received data and the third label sub-band received data.

13. The method of claim 2, further comprising:

combining the output of the third neural network into a complex value, performing a hard decision on the complex value based on modulation constellation points, and obtaining a second decision result; determining a tenth real number array according to a real part and an imaginary part of the data symbol of the received signal and a real part and an imaginary part of the second decision result; and rearranging the tenth real number array at the granularity of the processing sub-band to obtain fourth sub-band received data as the input of the second sub-network.

14. The method of claim 2, further comprising:

generating data symbol modulation data and causing the data symbol modulation data to pass through a wireless fading channel to obtain sample data symbol; determining an eleventh real number array according to a real part and an imaginary part of the data symbol modulation data and a real part and an imaginary part of the sample data symbol; rearranging the eleventh real number array at a granularity of a processing sub-band to obtain fourth sample sub-band received data; determining a twelfth real number array according to a real part and an imaginary part of an ideal channel through which the sample data symbol passes; rearranging the twelfth real number array at the granularity of the processing sub-band to obtain fourth label sub-band received data; and training the second sub-network according to the fourth sample sub-band received data and the fourth label sub-band received data.

15. The method of claim 1, wherein a loss function for training the second neural network or the third neural network comprises at least one of the following: a mean square error loss function, a Euclidean distance, or a cosine distance.

16. A communication node, comprising a memory and at least one processor, wherein

the memory is configured to store at least one program; and
when executed by the at least one processor, the at least one program causes the at least one processor to perform the signal receiving method of any one of claims 1 to 15.

17. A computer-readable storage medium storing a computer program which, when executed by a processor, causes the processor to perform the signal receiving method of any one of claims 1 to 15.

Input a received signal to a receiver to obtain an output signal, where the received signal includes a data pilot symbol and a data symbol, and the receiver includes the following cascaded neural networks: a first neural network for pre-demodulating the data pilot symbol of the received signal, a second neural network for performing channel estimation on the data pilot symbol and the data symbol of the received signal, and a third neural network for equalizing the data symbol of the received signal

110

Demodulate the output signal to obtain received data

120

**FIG. 1**

Data pilot symbol layer 1
Data pilot symbol layer 2
Data pilot symbol layer 1&2

**FIG. 2**

Transmit bit stream → Encoding → Modulation → $X_{PW}$ → Layer mapping → IFFT → Add CP

$X_{bit}$ $X_{Data}$

Wireless channel

Receive bitstream ← Decoding ← Demodulation ← $\hat{X}_{PW}$

Cascaded-neural-network-based receiver

| Channel equalization neural network Net3 | Channel estimation neural network Net2 | Pre-demodulation neural network Net1 |

$Y_{PW}$ ← FFT ← Remove CP

$\hat{X}_{Data}$

$Y_{Data}$

**FIG. 3**

**FIG. 4**

210

220

Input module —— Demodulation module

**FIG. 5**

Memory —— 320

Input apparatus —— 340

Communication apparatus —— 330

Processor —— 310

Output apparatus —— 350

**FIG. 6**

## INTERNATIONAL SEARCH REPORT

International application No.

**PCT/CN2024/103021**

### A. CLASSIFICATION OF SUBJECT MATTER

H04B 1/16(2006.01)i

According to International Patent Classification (IPC) or to both national classification and IPC

### B. FIELDS SEARCHED

Minimum documentation searched (classification system followed by classification symbols)

IPC: H04B, H04L, H04W, G06N

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 神经网络, 信道估计, 均衡, 解调, 级联, 实部, 虚部, 子带, 导频, neural w network, channel w estimation, equalizat+, demodulat+, concatenate+, real w part, imaginary w part, sub-band, pilot

### C. DOCUMENTS CONSIDERED TO BE RELEVANT

| Category* | Citation of document, with indication, where appropriate, of the relevant passages | Relevant to claim No. |
|---|---|---|
| A | CN 114826832 A (HUAWEI TECHNOLOGIES CO., LTD.) 29 July 2022 (2022-07-29) description, paragraphs [0101]-[0273] | 1-17 |
| A | CN 110365613 A (CHONGQING UNIVERSITY) 22 October 2019 (2019-10-22) entire document | 1-17 |
| A | CN 114844749 A (UNIVERSITY OF ELECTRONIC SCIENCE AND TECHNOLOGY OF CHINA) 02 August 2022 (2022-08-02) entire document | 1-17 |
| A | WO 2022149893 A1 (SAMSUNG ELECTRONICS CO., LTD.) 14 July 2022 (2022-07-14) entire document | 1-17 |
| A | FUJITSU. "RP-213070, Views on Use Case Selection in AI/ML for NR Air Interface" *3GPP TSG-RAN #94e*, 17 December 2021 (2021-12-17), entire document | 1-17 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 September 2024** | **24 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103021**

| Patent document cited in search report | | | Publication date (day/month/year) | Patent family member(s) | | | Publication date (day/month/year) |
|---|---|---|---|---|---|---|---|
| CN | 114826832 | A | 29 July 2022 | None | | | |
| CN | 110365613 | A | 22 October 2019 | None | | | |
| CN | 114844749 | A | 02 August 2022 | None | | | |
| WO | 2022149893 | A1 | 14 July 2022 | EP | 4256764 | A1 | 11 October 2023 |
| | | | | KR | 20230129171 | A | 06 September 2023 |
| | | | | CN | 114745789 | A | 12 July 2022 |

Form PCT/ISA/210 (patent family annex) (July 2022)